# EUROPEAN PATENT APPLICATION

(11) **EP 4 541 654 A1**
(43) Date of publication of application: **23.04.2025**
(21) Application number: 23864455.3
(22) Date of filing: 30.06.2023
(51) Int. Cl.: B60N 2/838

(54) **SEAT FOR VEHICLE, AND VEHICLE**

(30) Priority: 14.09.2022 CN 202222439260 U
(71) Applicant: Nio Technology (Anhui) Co., Ltd, Hefei City, Anhui 230601 (CN)
(72) Inventor: LI, Chun, Shanghai 201804 (CN); HU, Yunfei, Shanghai 201804 (CN); LV, Meihai, Shanghai 201804 (CN); CAI, Can, Shanghai 201804 (CN); WANG, Jianping, Shanghai 201804 (CN)
(74) Representative: Vossius & Partner Patentanwälte Rechtsanwälte mbB
(86) International application number: PCT/CN2023/105213
(87) International publication number: WO 2024/055718

(57) **Abstract**

The invention relates to the field of vehicle manufacturing. In order to solve the problem of an existing seat for a vehicle that metal parts at the connection between a headrest and a backrest are likely to be exposed during the adjustment of the headrest, the invention proposes a seat for a vehicle. The seat comprises a seat body, a headrest and a headrest adjustment structure, wherein the headrest adjustment structure is arranged between the seat body and the headrest; and the headrest adjustment structure comprises a front cover and a rear cover, the front cover being nested on an inner side of the rear cover in a manner of being slidable forward or backward, the headrest being sleeved on an outer side of the front cover in a manner of being slidable upward or downward, and the rear cover being fixedly connected to the seat body. When the headrest is adjusted upward or downward, first sliding rails on the headrest slide upward or downward along second sliding rails on the front cover, and the metal parts are shielded by the headrest and the front cover during the movement of the headrest upward or downward; and when the headrest is adjusted forward or backward, the headrest is pulled to enable a third sliding rail in the front cover to slide forward or backward along a fourth sliding rail in the rear cover, and at this time, the metal parts are fully shielded by the front cover and the rear cover.

## Description

The present application claims the priority to Chinese Patent Application No. CN 202222439260.1, filed on September 14, 2022, entitled "SEAT FOR VEHICLE, AND VEHICLE", which is incorporated herein by reference in its entirety.

### TECHNICAL FIELD

The invention relates to the technical field of vehicle manufacturing, and in particular provides a seat for a vehicle, and a vehicle.

### TECHNICAL BACKGROUND

In today's life, vehicle seats bring comfortable experience to users due to their ingenious design and soft texture, and are increasingly available for the public. As people's living standards improve, consumers are paying more and more attention to the refinement and aesthetics of seats. In order to make a user more comfortable when sitting on a seat, the existing seat has an additional function of adjusting a seat headrest. However, during the adjustment of the seat headrest, at the connection between the headrest and a backrest, a hole is likely to appear or metal parts are likely to be exposed, which affects the aesthetics of the seat. In addition, the exposed metal parts easily bump against the user sitting behind, and dust and debris easily enter to result in a shortened service life, which easily causes customer complaints. This is especially true for a seat having a four-way adjustable headrest, which not only needs to consider the exposure of metal parts in the Z-direction, but also the exposure of metal parts in the X-direction.

The existing seat having a four-way adjustable headrest often achieves the purpose of shielding metal parts by increasing the volume of the headrest. However, when the headrest needs to be adjusted forward or backward, the metal parts will still be exposed, so that the metal parts cannot be always shielded, which affects the overall appearance of the seat and thus the customer's experience.

Therefore, there is a need in the art to propose a novel seat for a vehicle, in order to solve the above problem.

### SUMMARY

The invention aims to solve the above technical problem, that is, the problem that metal parts at the connection between a headrest and a backrest of a seat for a vehicle are likely to be exposed during the adjustment of the headrest.

In a first aspect, the invention provides a seat for a vehicle, the seat including a seat body, a headrest and a headrest adjustment structure, wherein the headrest adjustment structure is arranged between the seat body and the headrest; and
the headrest adjustment structure includes a front cover and a rear cover, the front cover and the rear cover being nested with and connected to each other in a manner of being slidable forward or backward, the headrest being sleeved on an outer side of the front cover in a manner of being slidable upward or downward, and the rear cover being fixedly connected to the seat body.

In a specific implementation of the seat for a vehicle described above, the front cover includes a front cover surface, first sliding rails are provided in the headrest, second sliding rails are provided on an outer side of the front cover surface, a third sliding rail is provided on an inner side of the front cover, a fourth sliding rail is provided inside the rear cover, the first sliding rails are capable of sliding upward or downward along the second sliding rails, and the third sliding rail is capable of sliding forward or backward along the fourth sliding rail.

In a specific implementation of the seat for a vehicle described above, a guide bar is provided on the headrest, a first through hole is formed in the front cover surface, and the guide bar passes through the first through hole in a front-rear direction.

In a specific implementation of the seat for a vehicle described above, the first through hole is a kidney-shaped hole, and a lengthwise direction of the kidney-shaped hole is an up-down direction.

In a specific implementation of the seat for a vehicle described above, snap-fit bumps are provided in the first through hole, and snap-fit recesses corresponding to the snap-fit bumps are formed in the guide bar.

In a specific implementation of the seat for a vehicle described above, a U-shaped opening is formed in the headrest, and the headrest is sleeved on the front cover via the U-shaped opening.

In a specific implementation of the seat for a vehicle described above, a second through hole is formed in the rear cover in the front-rear direction, and the front cover is inserted inside the through hole of the rear cover in a manner of being slidable forward or backward.

In a specific implementation of the seat for a vehicle described above, a guide member is further provided in the rear cover, and the guide bar passes through the first through hole in the front-rear direction and is then inserted into the guide member.

In a specific implementation of the seat for a vehicle described above, a headrest guide rod is provided in the rear cover and fixed in the up-down direction, and the guide member is arranged on the headrest guide rod in a manner of being slidable upward or downward.

The invention further provides a vehicle including a seat for a vehicle according to any one of the above technical solutions.

With the above technical solutions, in order to solve the problem in the background art, the seat for a vehicle according to the invention includes a seat body, a headrest and a headrest adjustment structure. When the headrest needs to be adjusted upward or downward, the first sliding rails on the headrest slide upward or downward along the second sliding rails on the front cover, and at this time, the metal parts are shielded by the headrest and the front cover during the movement of the headrest upward or downward; and when the headrest needs to be adjusted forward or backward, the headrest can be pulled to enable the third sliding rail in the front cover to slide forward or backward along the fourth sliding rail in the rear cover, and during the forward or backward sliding process, the metal parts are fully shielded by the front cover and the rear cover. In this way, during the adjustment of the headrest of the seat for a vehicle, the metal parts at the connection between the headrest and the backrest are always shielded by the headrest and the headrest adjustment structure, which solves the problem of the existing seat for a vehicle that the metal parts at the connection between the headrest and the backrest are likely to be exposed during the adjustment of the headrest, and the exposed metal parts easily bump against the user sitting behind, and dust and debris easily enter to result in a shortened service life.

### BRIEF DESCRIPTION OF THE DRAWINGS

Preferred implementations of the invention are described below with reference to the drawings, in which:
FIG. 1 is a schematic diagram of an overall structure of a seat for a vehicle according to the invention;
FIG. 2 is a schematic diagram of a front cover and a rear cover of a headrest adjustment structure of the seat for a vehicle according to the invention;
FIG. 3 is a schematic diagram of a structure of a headrest of the seat for a vehicle according to the invention;
FIG. 4 is a schematic diagram of a structure of the seat for a vehicle according to the invention, with the front cover being nested in the rear cover;
FIG. 5 is a schematic diagram of a structure of the headrest and the front cover of the seat for a vehicle according to the invention after being mounted; and
FIG. 6 is a schematic diagram of a structure of the rear cover of the seat for a vehicle according to the invention.

### List of reference signs:

1- seat; 11- seat body; 12 - headrest; 121 - first sliding rail; 122 - guide bar; 123 - U-shaped opening; 13 - headrest adjustment structure; 131 - front cover; 1311 - second sliding rail; 1312 - third sliding rail; 1313 - front cover surface; 13131 - first through hole; 131311 - snap-fit bump; 132 - rear cover; 1321 - fourth sliding rail; 1323 - second through hole; 1324 - guide member; 1325 - headrest guide rod.

### DETAILED DESCRIPTION OF EMBODIMENTS

Preferred implementations of the invention will be described below with reference to the drawings. Those skilled in the art should understand that these implementations are merely used to explain the technical principles of the invention, and are not intended to limit the scope of protection of the invention. Those skilled in the art can make adjustments to the implementations according to requirements, so as to adapt to specific application scenarios.

It should be noted that, in the description of the invention, the terms that indicate the direction or positional relationship, such as "up", "down", "front", "back", "left" and "right", are based on the direction or positional relationship shown in the drawings, which is merely for ease of description instead of indicating or implying that a device or element must have a particular orientation and be constructed and operated in a particular orientation, and therefore, should not be construed as limiting the invention. In addition, the terms "first", "second", "third" and "fourth" are for descriptive purposes only and should not be construed as indicating or implying relative importance.

In addition, it should also be noted that, in the description of the invention, the terms "connect" should be interpreted in a broad sense unless explicitly defined and limited otherwise, which, for example, may be a fixed connection, a detachable connection or an integral connection; may be a direct connection, or an indirect connection by means of an intermediate medium. For those skilled in the art, the specific meanings of the foregoing terms in the invention can be interpreted according to a specific situation.

The specific implementations of the invention are described below.

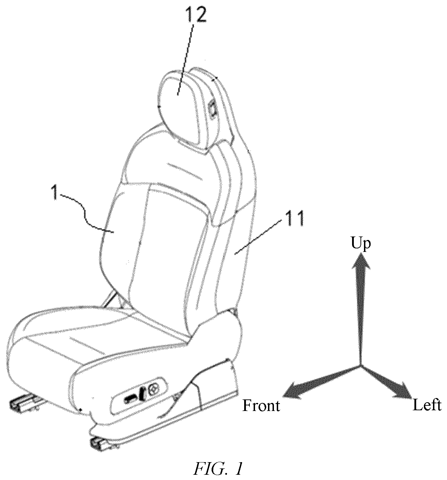

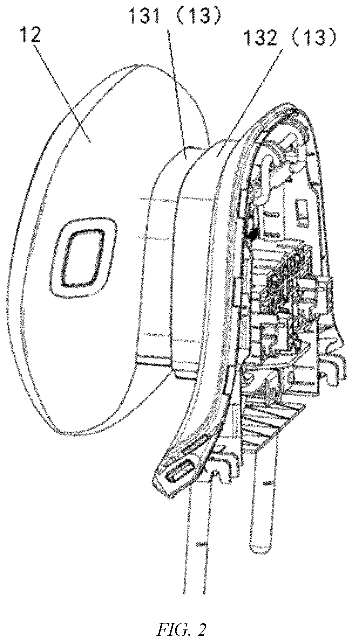

First, referring to FIGS. 1 and 2, a seat (1) for a vehicle according to the invention includes a seat body (11), a headrest (12) and a headrest adjustment structure (13). The headrest (12) is arranged at the front, the seat body (11) is arranged at the back, and the headrest adjustment structure (13) is arranged between the seat body (11) and the headrest (12). As shown in FIG. 2, the headrest adjustment structure (13) includes a front cover (131) and a rear cover (132), the front cover (131) being nested on an inner side of the rear cover (132) in a manner of being slidable forward or backward, the headrest (12) being sleeved on an outer side of the front cover (131) in a manner of being slidable upward or downward, and the rear cover (132) being fixedly connected to the seat body (11).

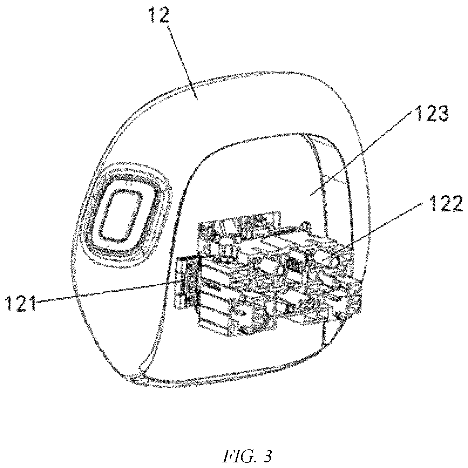

Next, the headrest (12) of the seat (1) for a vehicle according to the invention is illustrated with reference to FIG. 3. As shown in FIG. 3, the headrest (12) of the seat (1) for a vehicle according to the invention includes a U-shaped opening (123), first sliding rails (121) and a guide bar (122). The U-shaped opening (123) is arranged at the back of the headrest (12), and left and right first sliding rails (121) are arranged in the U-shaped opening (123) (the first sliding rail (121) on the right is not fully shown in the figure, and is arranged symmetrically with the first sliding rail (121) on the left).

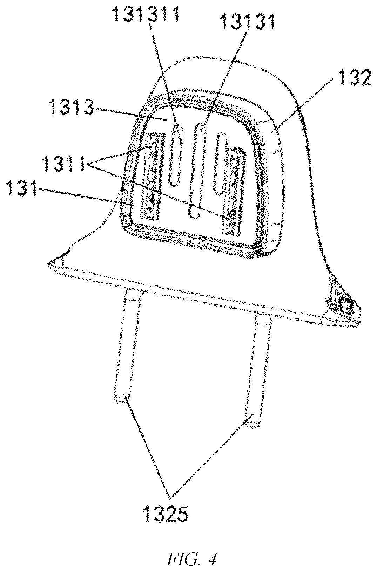

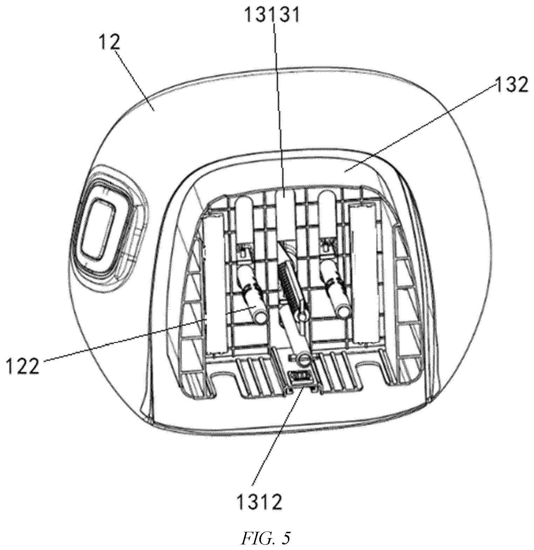

Next, the front cover (131) of the seat (1) for a vehicle according to the invention is illustrated with reference to FIGS. 4 and 5. As shown in FIG. 4, two second sliding rails (1311) are provided on an outer side of a front cover surface (1313), and the second sliding rails (1311) are configured to enable the first sliding rails (121) to slide upward or downward along them. As shown in FIG. 5, a third sliding rail (1312) is arranged on an inner side of the front cover (131), and the sliding direction of the third sliding rail (1312) is a front-rear direction.

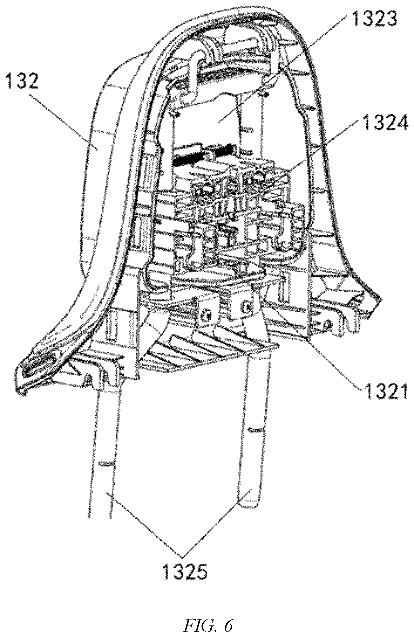

Next, the rear cover (132) of the seat (1) for a vehicle according to the invention is illustrated with reference to FIGS. 4 and 6. As shown in FIG. 6, a fourth sliding rail (1321) is provided inside the rear cover (132), and the sliding direction of the fourth sliding rail (1321) is consistent with the sliding direction of the third sliding rail (1312), both of which slide in the front-rear direction. A second through hole (1323) is formed in the rear cover (132) in the front-rear direction, and the second through hole (1323) is a large square through hole. As shown in FIG. 6, the second through hole (1323) allows the front cover (131) to be inserted inside it in a manner of being slidable forward or backward.

With the above implementation, when the headrest (12) needs to be adjusted upward or downward, the first sliding rails (121) on the headrest (12) slide upward or downward along the second sliding rails (1311) on the front cover (131), and at this time, the metal parts are shielded by the headrest (12) and the front cover (131) during the movement of the headrest (12) upward or downward; and when the headrest (12) needs to be adjusted forward or backward, since there is no relative movement in the front-rear direction between the first sliding rails (121) and the second sliding rails (1311), the headrest (12) can be pulled to enable the third sliding rail (1312) in the front cover (131) to slide forward or backward along the fourth sliding rail (1321) in the rear cover (132), and during the forward or backward sliding process, the metal parts are fully shielded by the front cover (131) and the rear cover (132). In this way, during the adjustment of the headrest (12) of the seat (1) for a vehicle, the metal parts at the connection between the headrest (12) and the backrest are always shielded by the headrest (12) and the headrest adjustment structure (13), which solves the problem of the existing seat (1) for a vehicle that the metal parts at the connection between the headrest (12) and the backrest are likely to be exposed during the adjustment of the headrest (12), and the exposed metal parts easily bump against the user sitting behind, and dust and debris easily enter to result in a shortened service life.

The above implementation is advantageous in that, in this implementation, the guiding and connecting functions of the sliding rails are cleverly utilized to enable the headrest (12) to move relative to the front cover (131) in the up-down direction, and the characteristic of the sliding rails being unable to generate relative displacement in a non-sliding direction is utilized such that the second sliding rails (1311) become connectors that connect the headrest (12) and the front cover (131) to implement the adjustment of the headrest (12) in the front-rear direction. This arrangement reduces the number of parts and also saves space for the seat (1), thereby reducing the production cost of the seat (1) while achieving the function of adjusting the direction of the headrest (12).

In a preferred implementation, as shown in FIGS. 4 to 6, a guide bar (122) is provided on the headrest (12), a first through hole (13131) is further formed in the front cover surface (1313), the first through hole (13131) is a kidney-shaped hole, the lengthwise direction of the kidney-shaped hole is in the up-down direction, a guide member (1324) is provided on the rear cover (132), a headrest guide rod (1325) is provided in the rear cover (132) and fixed in the up-down direction, and the guide member (1324) is arranged on the headrest guide rod (1325) in a manner of being slidable upward or downward.

With the above implementation, when the headrest (12) needs to be adjusted forward or backward, the guide bar (122) on the headrest (12) passes through the first through hole (13131) and is then inserted into the guide member (1324), so as to achieve a guiding effect on the adjustment of the headrest (12) in the front-rear direction. When the headrest (12) needs to be adjusted upward or downward, since the first through hole (13131) is a kidney-shaped hole and the lengthwise direction of the kidney-shaped hole is the up-down direction, two sides of the kidney-shaped hole may guide the movement of the headrest (12) when the headrest (12) moves upward or downward. On the other hand, since the guide bar (122) passes through the first through hole (13131) and is then inserted into the guide member (1324) while the guide member (1324) is arranged on the fixed headrest guide rod (1325) in a manner of being slidable upward or downward, the guide member (1324) can also achieve a certain guiding effect on the movement of the headrest (12) in the up-down direction.

The above implementation is advantageous in that a guide member (1324), a kidney-shaped hole and other structures are provided to cooperate with the guide bar (122) to assist the sliding rails to adjust the direction of the headrest (12), which further ensures the stability of the headrest (12) during the direction adjustment and prevents the headrest (12) from being unable to normally implement the direction adjustment function when the sliding rail is offset in direction, thereby ensuring the user experience.

In a preferred implementation, snap-fit bumps (131311) are provided in the first through hole (13131), and snap-fit recesses (which are relatively small in structure and thus not shown in the figure) corresponding to the snap-fit bumps (131311) are formed in the guide bar (122).

With the above implementation, several snap-fit bumps (131311) are provided in the first through hole (13131), and when the position of the headrest (12) is adjusted to an appropriate expected position during the direction adjustment of the headrest (12), the snap-fit recesses in the guide bar (122) snap-fit to the closest snap-fit bumps (131311), so that the headrest (12) is fixed in position. Still further, the snap-fit bumps (131311) in the first through hole (13131) are beveled snap-fit bumps (131311), which facilitates re-adjustment of the direction of the headrest (12) while meeting the strength requirement for supporting the headrest (12), which is time-saving and effort-saving.

Regarding the front cover (131) and the rear cover (132), although it is mentioned above that the front cover (131) is nested on the inner side of the rear cover (132) in a manner of being slidable forward or backward, this is not the only implementation and is also not a limitation on the scope of protection of the invention. Those skilled in the art should understand that the front cover (131) may be nested on the inner side of the rear cover (132) in a manner of being slidable forward or backward, or the rear cover (132) may be nested on the inner side of the front cover (131) in a manner of being slidable forward or backward, as long as the front cover (131) and the rear cover (132) are nested with and connected to each other in a manner of being slidable forward or backward. This change does not go beyond the principles of the invention and is therefore also included in the scope of protection of the invention.

Regarding the U-shaped opening (123) provided at the back of the headrest (12), although it is mentioned above that it is U-shaped, those skilled in the art should understand that this is not a limitation on the invention, and the U-shaped opening (123) herein may also be in other shapes, such as a V-shaped opening. This change does not go beyond the principles of the invention and is therefore also included in the scope of protection of the invention.

The invention further provides a vehicle including a seat (1) for a vehicle according to any one of the above technical solutions.

Heretofore, the technical solutions of the invention have been described with reference to the preferred implementations shown in the drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention

## Claims

1. A seat for a vehicle, the seat comprising a seat body, a headrest and a headrest adjustment structure, wherein the headrest adjustment structure is arranged between the seat body and the headrest; and
the headrest adjustment structure comprises a front cover and a rear cover, the front cover and the rear cover being nested with and connected to each other in a manner of being slidable forward or backward, the headrest being sleeved on an outer side of the front cover in a manner of being slidable upward or downward, and the rear cover being fixedly connected to the seat body.

2. The seat for a vehicle according to claim 1, wherein the front cover comprises a front cover surface, first sliding rails are provided in the headrest, second sliding rails are provided on an outer side of the front cover surface, a third sliding rail is provided on an inner side of the front cover, a fourth sliding rail is provided inside the rear cover, the first sliding rails are capable of sliding upward or downward along the second sliding rails, and the third sliding rail is capable of sliding forward or backward along the fourth sliding rail.

3. The seat for a vehicle according to claim 2, wherein a guide bar is provided on the headrest, a first through hole is formed in the front cover surface, and the guide bar passes through the first through hole in a front-rear direction.

4. The seat for a vehicle according to claim 3, wherein the first through hole is a kidney-shaped hole, and a lengthwise direction of the kidney-shaped hole is an up-down direction.

5. The seat for a vehicle according to claim 4, wherein snap-fit bumps are provided in the first through hole, and snap-fit recesses corresponding to the snap-fit bumps are formed in the guide bar.

6. The seat for a vehicle according to claim 1, wherein a U-shaped opening is formed in the headrest, and the headrest is sleeved on the front cover via the U-shaped opening.

7. The seat for a vehicle according to claim 2, wherein a second through hole is formed in the rear cover in the front-rear direction, and the front cover is inserted inside the through hole of the rear cover in a manner of being slidable forward or backward.

8. The seat for a vehicle according to claim 3, wherein a guide member is further provided in the rear cover, and the guide bar passes through the first through hole in the front-rear direction and is then inserted into the guide member.

9. The seat for a vehicle according to claim 8, wherein a headrest guide rod is provided in the rear cover and fixed in the up-down direction, and the guide member is arranged on the headrest guide rod in a manner of being slidable upward or downward.

10. A vehicle provided with a seat for a vehicle according to any one of claims 1 to 9.
